# EUROPÄISCHE PATENTSCHRIFT

(11) **EP 1 797 533 B1**
(45) Veröffentlichungstag und Bekanntmachung des Hinweises auf die Patenterteilung: **11.08.2010**
(21) Anmeldenummer: 05768347.6
(22) Anmeldetag: 10.06.2005
(51) Int. Cl.: G06T 7/00, G06T 5/00

(54) **VERFAHREN UND VORRICHTUNG ZUR SEGMENTIERUNG EINER DIGITALEN ABBILDUNG VON ZELLEN**
METHOD AND DEVICE FOR SEGMENTING A DIGITAL REPRESENTATION OF CELLS
PROCEDE ET DISPOSITIF POUR SEGMENTER UNE REPRESENTATION NUMERIQUE DE CELLULES

(30) Priorität: 11.06.2004 DE 102004028372
(43) Veröffentlichungstag der Anmeldung: 20.06.2007
(73) Patentinhaber: Universität Bremen, 28359 Bremen (DE)
(72) Erfinder: HERZOG, Otthein, 28355 Bremen (DE); FRIEDL, Peter, 97076 Würzburg (DE); GOTTFRIED, Björn, 22301 Hamburg (DE)
(74) Vertreter: Eisenführ, Speiser & Partner
(86) Internationale Anmeldenummer: PCT/EP2005/006231
(87) Internationale Veröffentlichungsnummer: WO 2005/122092

(56) Entgegenhaltungen:
- BORST, HUGO; ABMAYR, WOLFGANG UND GAIS, PETER: "THRESHOLDING METHOD FOR AUTOMATIC CELL IMAGE SEGMENTATION" THE JOURNAL OF HISTOCHEMISTRY AND CYTOCHEMISTRY, [Online] Bd. 27, Nr. 1, 1979, Seiten 180-187, XP002348409 USA Gefunden im Internet: URL:www.jhc.org/cgi/reprint/27/1/180> [gefunden am 2005-10-10]
- YANOWITZ S D ET AL: "A NEW METHOD FOR IMAGE SEGMENTATION" PROCEEDINGS OF THE INTERNATIONAL CONFERENCE ON PATTERN RECOGNITION. (ICPR). ROME, 14 - 17 NOV., 1988, WASHINGTON, IEEE COMP. SOC. PRESS, US, Bd. VOL. 1 CONF. 9, 14. November 1988 (1988-11-14), Seiten 270-275, XP000112659 ISBN: 0-8186-0878-1
- ONG S H ET AL: "Image analysis of tissue sections" COMPUTERS IN BIOLOGY AND MEDICINE, NEW YORK, NY, US, Bd. 26, Nr. 3, Mai 1996 (1996-05), Seiten 269-279, XP004532242 ISSN: 0010-4825

## Beschreibung

Die Erfindung betrifft ein Verfahren und eine Vorrichtung zur Segmentierung einer digitalen Abbildung von biologischen Zellen, ein Verfahren und eine Vorrichtung zur Analyse des dynamischen Verhaltens biologischer Zellen sowie ein Verfahren und eine Vorrichtung zur Visualisierung des dynamischen Verhaltens biologischer Zellen.

Die Messung der Bewegung biologischer Zellen wird als Screeningverfahren zur pharmakologischen Wirkstoffsuche beispielsweise in der Tumor- und Immunforschung benutzt. Damit ist eine Methode als in-vitro Alternative zu Tierversuchen gegeben.

In einem bekannten Verfahren werden die Zellen mittels geeigneter Färbetechniken fluoreszierend eingefärbt, um damit die Unterscheidung zwischen den Zellen und dem Hintergrund bzw. der Umgebung zu erleichtern. Diese Technik hat den Nachteil, dass durch das Einfärben die Zellphysiologie beeinflusst werden kann, insbesondere Beweglichkeit und Bewegung der Zellen, also Eigenschaften, die zu untersuchen sind. Das Verfahren ist im wesentlichen auf eine zweidimensionale Probe wie beispielsweise einen Zellrasen beschränkt, da eine Präparation dreidimensionaler Proben sehr aufwändig wäre. Zudem ist die Auflösung der dritten Dimension gerätetechnisch besonders aufwändig, da es ein automatisiertes motorisiertes Mikroskop erfordert und große Datenmengen generiert, die Routineapplikationen erschweren. Insbesondere bei Langzeitversuchen ergeben sich die Probleme dadurch, dass die Fluoreszenzwirkung mit der Zeit durch Abbau oder Einlagerung in bestimmten Zellbestandteilen verändert wird. Wenn sich eine markierte Zelle während der Beobachtungszeit teilt, kann nicht sichergestellt werden, dass die Markierung auch an beide Tochterzellen gleichermaßen weitergegeben wird.

Konventionelle Verfahren zur Zellverfolgung machen Annahmen über Eigenschaften der Zelle wie etwa Form oder Größe, die als konstant angenommen werden. Diese Annahmen sind aber nicht für alle Zelltypen haltbar, insbesondere nicht für mobile Zellen. Weiterhin sind diese Verfahren entweder sehr aufwändig etwa im Hinblick auf benötigte Hardware oder Rechenleistung und / oder sehr empfindlich gegenüber unklaren Abgrenzungen zwischen Zelle und Umgebung. Die Abgrenzungen sind vor allem bei dreidimensionalen Proben von Zellen in einer heterogenen Kollagenmatrix nicht ausreichend gegeben.

Hugo Borst et al., "Thresholding method for automatic cell image segmentation", The Journal of Histochemistry and Cytochemistry, Bd. 27, Nr. 1, 1979, Seiten 180 - 187 offenbart ein Verfahren zur Segmentierung des Zellkernes und des Zytoplasmas unter Verwendung eines Gradienten-Histogramms auf einer lokalen 4er-Nachbarschaft. Die Segmentationsschwelle stammt aus einem anderen Histogramm, das morphologische Maße enthält.

S. D. Yanowitz et al., "A new method for image segmentation", Proceedings of the International Conference on Pattern Recognition (ICPR), Rome, 14 - 17 November 1998, Washington, IEEE Comp. Soc. Press, US, Bd. 1 Conf. 9, Seiten 270 - 275, ISBN: 0-8186-0878-1 beschreibt eine allgemeine Segmentierung auf der Basis von Maxima eines Gradienten-Histogramms, das aus Grauwerten ermittelt wird. Dieses Verfahren bezieht sich zwar auf die Maximumsuche in einem Gradienten-Histogramm für allgemeine Segmentierungsaufgaben, allerdings basiert das Histogramm nicht auf einem *maximalen* lokalen Gradienten.

Die Aufgabe der Erfindung ist es, ein Verfahren zur Segmentierung einer digitalen Abbildung von biologischen Zellen anzugeben, welches nur geringe technische Anforderungen hat, keine spezielle Präparation oder Manipulation an den zu beobachtenden Zellen benötigt und möglichst wenige Annahmen über Zelleigenschaften voraussetzt.

Diese Aufgabe wird durch ein Verfahren zur Segmentierung einer digitalen Abbildung von biologischen Zellen gelöst, das die folgenden Schritte aufweist:
- Bestimmen eines maximalen Gradienten je Bildpunkt der Abbildung als das Maximum der Differenzen zwischen einem Bildwert des Bildpunktes und den entsprechenden Bildwerten aller oder ausgewählter benachbarter Bildpunkte,
- Bestimmen eines Segmentierungsschwellwertes anhand der Häufigkeiten der maximalen Gradienten mit den Schritten,
   a) Zuordnen einer Gradientenhäufigkeit zu allen maximalen Gradienten als die Anzahl von Bildpunkten mit dem jeweiligen maximalen Gradienten,
   b) Bestimmen eines Umgebungsgrößenwerts als Anzahl der Bildpunkte, für die der häufigste maximale Gradient bestimmt wurde,
   c) Iteratives Vergleichen zwischen Umgebungsgrößenwert und einem vorgegebenen Schätzwert für die Anzahl von Bildpunkten, die die Umgebung einer biologischen Zelle abbilden, und Hinzufügen der Anzahl der Bildpunkte mit dem jeweils nächsthäufigsten maximalen Gradienten zum Umgebungsgrößenwert, bis der Umgebungsgrößenwert den Schätzwert überschreitet oder erreicht, und
   d) Bestimmen des Segmentierungsschwellwertes aus der Anzahl der Wiederholungen des Schrittes c),
- Klassifizieren der Bildpunkte in eine Objektklasse und eine Umgebungsklasse mittels des Segmentierungsschwellwertes, wobei die Bildpunkte, deren maximaler Gradient eine bei oder über dem Segmentierungsschwellwert liegende Größe aufweist, in die Objektklasse und die anderen Bildpunkte in die Umgebungsklasse eingeordnet werden, und
- Bildung eines Segmentbereichs der digitalen Abbildung mittels eines Klassenverschmelzungsverfahrens, insbesondere eines Bereichswachstumsverfahrens.

Der Erfindung liegt die Erkenntnis zugrunde, dass eine von Zelleigenschaften weitgehend unabhängige, gegenüber geringer Abbildungsqualität unempfindliche aber dennoch einfache Segmentierung aufgrund von Bildwertänderungen zwischen Bildpunkten möglich ist. Die für diese Erfindung wesentliche Eigenschaft der Bildpunkte einer zu segmentierenden Abbildung ist der Grad der Unterschiedlichkeit zu seinen umgebenden Bildpunkten. Für jeden auftretenden maximalen Gradienten wird die Anzahl des Auftretens bestimmt, also die Anzahl der Bildpunkte mit entsprechendem maximalen Gradienten. Ausgehend vom dem am häufigsten auftretenden maximalen Gradienten werden solange weitere, jeweils weniger häufige, maximale Gradienten hinzugenommen und jeweils die Gesamtzahl der Bildpunkte bestimmt, deren maximaler Gradient zu den ausgewählten gehört, bis eine vorbestimmte für die Umgebung der Zelle abgeschätzte Größe als Anzahl von Bildpunkten erreicht oder überschritten ist. Damit ergibt sich ein Segmentierungsschwellwert in Abhängigkeit von der Anzahl der bis zum Erreichen oder Überschreiten nötigen Iterationen, also abhängig davon, wie viele der häufigsten maximalen Gradienten hierzu zusammengefasst werden mussten, als eine Abgrenzung zwischen Bildpunkten, für die zunächst angenommen wird, dass sie die Zelle abbilden, und anderen Bildpunkten, für die angenommen wird, dass sie die Zellumgebung abbilden.

Durch das sukzessive Hinzunehmen der maximalen Gradienten mit fallender Häufigkeit, bis damit mehr Bildpunkte erfasst werden, als mit einen Schätzwert für die Umgebungsgröße, der sich aus der Differenz zwischen Bildgröße und einem Schätzwert für die Zellgröße ergibt, vorgegeben, erhält man einen von der Anzahl der Iterationen abhängigen, steigenden Schwellwert. Dieser Schwellwert kann als gleich der Anzahl der Iterationen gewählt werden. Eine andere Möglichkeit besteht darin, den Schwellwert um einen vorbestimmten Wert größer oder kleiner als die Anzahl der Iterationen anzusetzen, also eine absolute Differenz zwischen der Anzahl der Iterationen und dem Schwellwert vorzusehen. Eine weitere Möglichkeit ist es, die Anzahl der Iterationen mit einen vorbestimmten Faktor (größer oder kleiner als 1) zu multiplizieren und somit eine relative Abweichung zwischen der Anzahl der Iterationen und dem Schwellwert zu erhalten. Diese Möglichkeiten können auch kombiniert werden.

In einer Ausgestaltung der Erfindung wird der Segmentierungsschwellwert als die Anzahl der Wiederholungen des Schrittes c) bestimmt. Es hat sich gezeigt, dass bei dieser Wahl im allgemeinen die besten Segmentierungsergebnisse erzielt werden können. In speziellen Anwendungsfällen und bei besonderen Abbildungskonstellationen können jedoch mit einem veränderten Schwellwert bessere Ergebnisse erzielt werden. In einer weiteren Ausgestaltung der Erfindung wird zur Bestimmung des Segmentierungsschwellwertes die Anzahl der Wiederholungen mit einem vorbestimmten Faktor, insbesondere im Bereich von 0,5 bis 1,5, bevorzugt im Bereich von 0,66 bis 1,33, besonders bevorzugt im Bereich von 0,8 bis 1,2, multipliziert und/oder zu der Anzahl der Wiederholungen eine vorbestimmte Konstante, insbesondere im Bereich von -10 bis +10, bevorzugt im Bereich von -5 bis +5, addiert. Es ist zu bemerken, dass die vorbestimmte Konstante auch kleiner als Null sein kann.

Die Unterteilung der Abbildung anhand des Segmentierungsschwellwertes ergibt zwei Gruppen von Bildpunkten. Kleinere Bereiche von irrtümlich in die Gruppe der Zellenumgebung eingeordneten Bildpunkten finden sich im Bereich der Zelle und umgekehrt. Mittels eines aus der Bildverarbeitung bekannten Klassenverschmelzungsverfahrens, z.B. eines region-growing-Verfahrens, wird die Gruppe der der Zelle zugeordneten Bildpunkte zu einem zusammenhängenden Bereich zusammengeführt. Vereinzelte kleinere Bildpunktbereiche oder einzelne Bildpunkte können bei diesem Verfahren fallengelassen werden, werden also der Gruppe der der Zellumgebung zugeordneten Bildpunkte zugerechnet. Entsprechendes ergibt sich, wenn das Klassenverschmelzungsverfahren auf die Gruppe der der Zellumgebung zugeordneten Bildpunkte angewandt wird.

Da nicht absolute Eigenschaften der Bildpunkte, sondern die relative Veränderung dieser Eigenschaften zu benachbarten Bildpunkten die Basis für das erfindungsgemäße Verfahren bildet, ist das Verfahren unempfindlich gegen schwankende Bildparameter wie beispielsweise Beleuchtung oder Kontrast. Dies verringert den nötigen technischen Aufwand und erweitert die Anwendungsmöglichkeiten. Da keine Veränderungen, beispielsweise durch Präparation wie Einfärbung, an den Zellen vorgenommen werden müssen, werden die Beobachtungsergebnisse nicht durch diese Veränderungen gegebenenfalls verfälscht.

In einer bevorzugten Ausgestaltung der Erfindung ist der untersuchte Bildwert eines Bildpunktes der Grauwert des Bildpunktes. Obwohl auch andere Bildwerte eines Bildpunktes wie etwa Farbeigenschaften verwendet werden können, hat der Grauwert gegenüber diesen den Vorteil geringerer Ansprüche an Bildaufnahmeeinrichtungen und Speicherkapazität. Hierbei kann eine Auflösung von 256 Grauwerten bereits ausreichen.

In einer weiteren Ausgestaltung der Erfindung werden die Bildpunkte einer 4er- oder 8er-Nachbarschaft um den zu untersuchenden Bildpunkt ausgewählt. Die 8er-Nachbarschaft umfasst die Punkte, die direkt an den zu untersuchenden Bildpunkt angrenzen, während die 4er-Nachbarschaft nur jeden zweiten dieser 8 umgebenden Punkte umfasst. Werden die Gradienten gleichmäßig in alle Richtungen in der Ebene zur Bestimmung des maximalen Gradienten herausgezogen, ergibt sich keine Ungleichgewichtung einer bestimmten Richtung, was zu einer Verzerrung der Segmentierung führen könnte.

In einer vorteilhaften Ausgestaltung der Erfindung wird der vorbestimmte Schätzwert aus der Differenz der Bildgröße und dem Produkt von durchschnittlicher Querschnittsfläche einer Zelle und Auflösung der digitalen Abbildung bestimmt. Dieser Schätzwert fußt auf der Annahme, dass die Zelle selbst bei Änderung der Form ihre Größe annähernd beibehalten wird. Weitere Annahmen, die besondere Kenntnisse über die zu untersuchenden Zellen voraussetzen oder die die Auswahl der Zellen einschränken, die untersucht werden können, werden nicht gemacht.

Die Erfindung betrifft auch ein Verfahren zur Analyse des dynamischen Verhaltens biologischer Zellen anhand eines Bilddatensatzes mehrerer in zeitlichen Abständen nacheinander erstellter Abbildungen der Zellen in einem Untersuchungsbereich mit den Schritten:
- Segmentieren einer ersten Abbildung zur Bestimmung von ersten Zellpositionen in der ersten Abbildung,
- Segmentieren einer zweiten Abbildung zur Bestimmung von zweiten Zellpositionen in der zweiten Abbildung und
- Zuordnen der zweiten Zellpositionen zu den ersten Zellpositionen,
   wobei die Segmentierung gemäß dem oben beschriebenen erfindungsgemäßen Verfahren erfolgt. Das dynamische Verhalten der einzelnen Zelle wird dadurch analysiert, dass in den zeitlich aufeinander folgenden Abbildungen jeweils Segmentbereiche bestimmt werden, die den abgebildeten Zellen entsprechen, und diese Segmentbereiche einander zugeordnet werden. Neben einer Bewegung kann das dynamische Verhalten auch Teilungen oder Formveränderungen der Zelle bzw. Zellen enthalten. Allgemein werden unter dynamischen Verhalten alle Veränderungen von Zelleigenschaften verstanden.

In einer bevorzugten Ausgestaltung des erfindungsgemäßen Analyseverfahrens wird beim Segmentieren der zweiten Abbildung der vorbestimmte Schätzwert aus der durchschnittlichen Anzahl von Bildpunkten der Zellen darstellenden Segmentbereiche in der ersten Abbildung bestimmt. Dieser verbesserte Schätzwert liegt näher an der tatsächlichen Größe als der weiter oben angeführte, da hier zur Bestimmung des Schätzwertes die erkannten Größen der Zellen in der ersten Abbildung benutzt werden. Findet sich in der ersten Abbildung, die auch ein Ausschnitt aus einer größeren Abbildung sein kann, beispielsweise nur eine einzige Zelle, so ergibt sich der Schätzwert aus der Größe bzw. Bildpunktanzahl dieser Zelle, und es wird davon ausgegangen, dass sich die Größe der Zelle zwischen der ersten und zweiten Abbildung nicht wesentlich verändert. Der Schätzwert wird also die Größe der Umgebung der Zelle in der zweiten Abbildung gut annähern.

In einer vorteilhaften Ausgestaltung des erfindungsgemäßen Analyseverfahrens erfolgt die Zuordnung der zweiten Zellpositionen zu den ersten Zellpositionen anhand mindestens einer Zelleigenschaft aus der Gruppe Gesamtlichtstärke, Nähe, Größe und Form. Besonders bevorzugt wird hierbei die Eigenschaft Nähe verwendet, da die Zeitdifferenz zwischen zwei Abbildungen so eingestellt werden kann, dass die Zelle sich bis zur zweiten Abbildung nicht aus dem Nahbereich ihrer Position in der ersten Abbildung entfernt hat. Wählt der Benutzer in der zweiten Abbildung nur einen Ausschnitt um die Position einer Zelle in der ersten Abbildung, so kann damit zusätzlich die zur Segmentierung benötigte Rechenleistung oder -zeit verkürzt werden. Reicht das Kriterium der Nähe allein zur Entscheidung nicht aus, so können weitere Eigenschaften benutzt werden, um eine zuverlässige Zuordnung sicherzustellen.

Die Erfindung betrifft außerdem ein Verfahren zur Visualisierung des dynamischen Verhaltens biologischer Zellen anhand eines Bilddatensatzes mehrerer in zeitlichen Abständen nacheinander erstellter Abbildungen der Zellen in einem Untersuchungsbereich mit den Schritten:
- Aufnahme einer zeitlichen Abfolge von digitalen Abbildungen,
- Segmentieren einer Startabbildung,
- Auswahl einer oder mehrerer zu untersuchenden Zellen,
- Analyse des dynamischen Verhaltens der zu untersuchenden Zellen und
- Aufbereitung der Analyseninformationen,
   wobei die Segmentierung gemäß dem oben beschriebenen Segmentierungsverfahren und / oder die Analyse des dynamischen Verhaltens gemäß dem oben beschriebenen Analyseverfahren erfolgt. In der ersten Abbildung der zeitlichen Abfolge von Abbildungen wird nach dem Segmentieren eine Auswahl derjenige(n) Zelle(n) getroffen, die im weiteren analysiert werden sollen. Damit werden Startpositionen für die nachfolgende, dann automatisch ablaufende Analyse des dynamischen Verhaltens der Zelle bzw. Zellen gesetzt.

In einer vorteilhaften Ausgestaltung des erfindungsgemäßen Visualisierungsverfahrens erfolgt die Zuordnung der zweiten Zellpositionen zu den ersten Zellpositionen anhand einer Zellpositionen zugeordneten Bewegungsrichtung und / oder einer zugeordneten Geschwindigkeit. Ausgehend von einer Start- oder ersten Abbildung erhält man nach der Zuordnung der Zellpositionen zur zweiten Abbildung eine Richtung und eine Geschwindigkeit für diese Zuordnung, die benutzt werden können, um eine Zuordnung von Zellpositionen zu einer dritten Abbildung zu verbessern. Diese Zuordnung erfolgt weitgehend unabhängig von Störungen durch Änderungen der Zellgröße, der Zellform oder der Schärfe der Abbildung.

Die Erfindung sieht weiterhin Vorrichtungen zur Ausführung der erfindungsgemäßen Verfahren nach den Ansprüchen 13, 14 und 15 sowie ein Computerprogramm vor mit Computerprogrammcode zur Steuerung eines Computers zur Durchführung der Schritte eines erfindungsgemäßen Verfahrens, wenn das Computerprogramm auf einem Computer ausgeführt wird.

Im folgenden wird die Erfindung anhand von vorteilhaften Ausführungsformen mit Bezug auf die Figuren näher erläutert. Dabei zeigen:
- Fig. 1: eine schematische perspektivische Ansicht von Zellen in einer Kolla- genmatrix mit einem Querschnitt und einer Aufsicht,
- Fig. 2: ein Blockdiagramm, das das erfindungsgemäße Verfahren zur Visua- lisierung des dynamischen Verhaltens biologischer Zellen darstellt,
- Fig. 3: einen Ablaufplan eines Teiles des erfindungsgemäßen Verfahrens zur Visualisierung des dynamischen Verhaltens biologischer Zellen,
- Fig. 4: ein Blockdiagramm, das das erfindungsgemäße Verfahren zur Seg- mentierung darstellt,
- Fig. 5a: eine beispielhafte Abbildung einer Zelle,
- Fig. 5b: eine Klassifizierung der Abbildung aus Fig. 5a,
- Fig. 5c: eine Segmentierung der Abbildung aus Fig. 5a mit einer Darstellung eines Umrisses eines Segmentes,
- Fig. 5d: den in die Abbildung aus Fig. 5a eingetragenen Umriss aus Fig. 5c,
- Fig. 6: eine erfindungsgemäße Vorrichtung zur Aufnahme von Abbildungen von biologischen Zellen,
- Fig. 7a: eine weitere beispielhafte Abbildung einer Zelle,
- Fig. 7b: die Abbildung aus Fig. 7a nach eine Vorbearbeitung,
- Fig. 7c: ein Gradientenbild der Abbildung aus Fig. 7b,
- Fig. 7d: das Gradientenbild aus Fig. 7c in binarisierter Form nach der Anwen- dung des erfindungsgemäß bestimmten Schwellwertes,
- Fig. 7e: eine Abbildung der segmentieren Zelle nach Anwendung einer Klas- senverschmelzung,
- Fig. 7f: ein Gradientenhistogramm mit den Häufigkeiten der maximalen Gra- dienten aus Fig. 7d,
- Fig. 7g: eine sortierte Darstellung der maximalen Gradienten aus Fig. 7d mit steigender Häufigkeit,
- Fig. 7h: das Gradientendiagramm aus Fig. 7f mit eingezeichnetem Schwell- wert,
- Fig. 8a bis 8e: weitere beispielhafte Zell-Abbildungen ähnlich den Fig. 7a bis 7e,
- Fig. 8f: ein Gradientenhistogramm mit den Häufigkeiten der maximalen Gra- dienten aus Fif. 8d und
- Fig. 8g: eine sortierte Darstellung der maximalen Gradienten aus Fig. 8d mit steigender Häufigkeit.

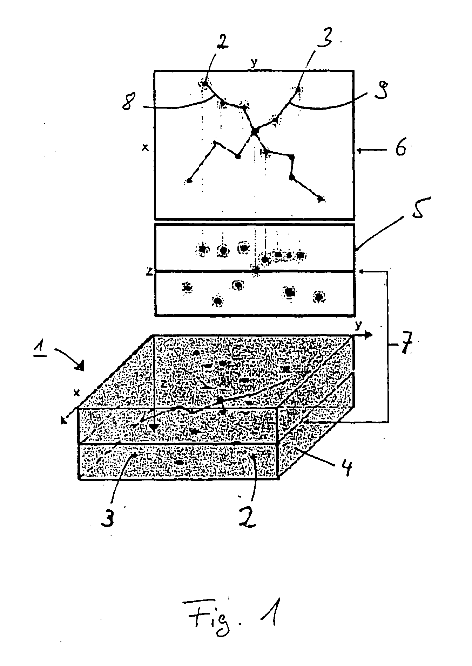

Fig. 1 zeigt eine schematische perspektivische Ansicht 1 von Zellen 2, 3 in einer Kollagenmatrix 4 mit einem Querschnitt 5 und einer Aufsicht 6. Wird eine Abbildung von der Kollagenmatrix 4 mit den Zellen 2, 3 gemacht, so muss auf eine Ebene 7 fokussiert werden. Wenn sich die Zellen 2, 3 bewegen, hier dargestellt durch die Wege 8, 9, so befinden sie sich nicht nur an unterschiedlichen x-y-Positionen, sondern können ebenfalls ihre z-Position verändern. Die Positionen der Zellen 2, 3 zu unterschiedlichen Zeitpunkten sind in Fig. 1 durch Punkte gekennzeichnet. Die Aufsicht 6 kann beispielsweise in zeitlichen Abständen aufgenommen werden und die dabei erhaltenen Abbildungen können zur Visualisierung der Zellbewegung benutzt werden. Ebenso ist es möglich, anhand anderer Eigenschaften wie etwa Zellform oder Zellgröße das dynamische Verhalten der Zellen zu untersuchen.

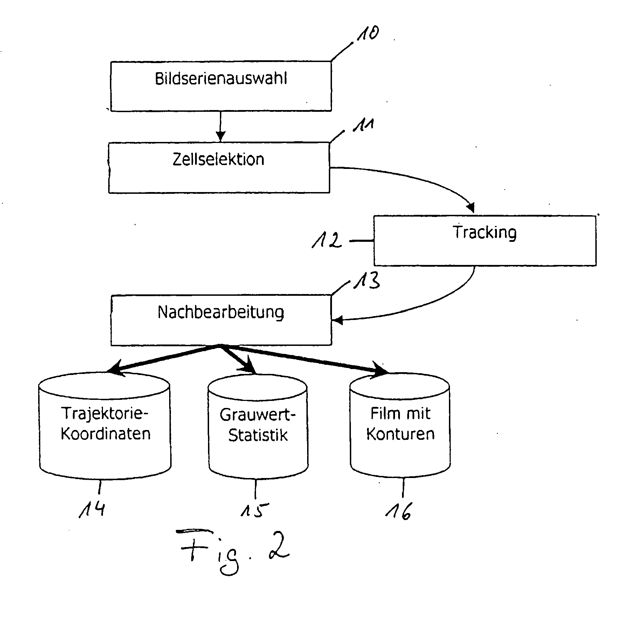

Fig. 2 zeigt ein Blockdiagramm, das das erfindungsgemäße Verfahren zur Visualisierung des dynamischen Verhaltens, insbesondere der Bewegung, biologischer Zellen darstellt. In einem ersten Schritt 10 wird aus den zur Verfügung stehenden zeitlich aufeinanderfolgenden Abbildungen eine Bildserie ausgewählt. Im folgenden Schritt der Zellselektion 11 werden in der ersten Abbildung Zellpositionen ausgewählt. Die zu diesen Zellpositionen gehörigen Zellen werden im Schritt der Verfolgung (Tracking) 12 verfolgt und ihre Bewegung wird analysiert. In einer Nachbearbeitung 13 werden die beim Tracking 12 gewonnenen Informationen kontrolliert, ggf. nachbearbeitet und aufgearbeitet und können dann als Trajektorie-Koordinaten 14, also als Bewegungsinformationen, als Grauwert-Statistik 15, also als Information über die Beschaffenheit der Zellen, oder als Film mit Konturen der Zellen 16, insbesondere zur Überprüfung der Qualität der Zellverfolgung, ausgegeben werden. Die Schritte 10, 11 und 13 sind hierbei interaktiv mit einem Benutzer, während das Tracking 12 automatisch abläuft. Die Abbildungen stehen nach erfolgter Aufnahme im Computer zur Verfügung; daher ist das Verfahren nicht nur offline, sondern auch online einsetzbar.

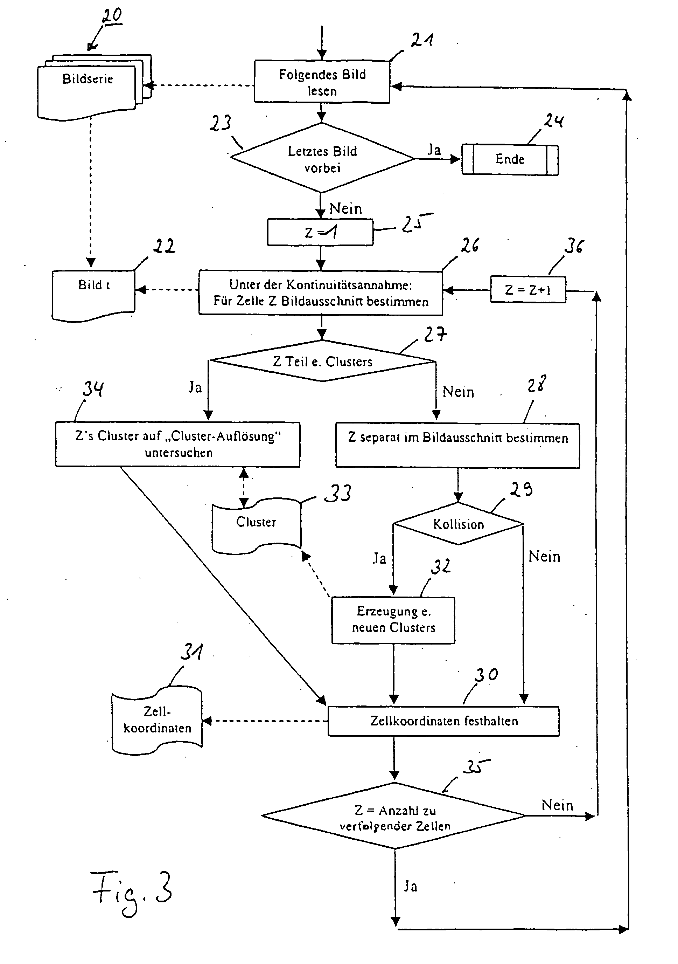

Fig. 3 zeigt einen Ablaufplan des Schrittes 12 der Fig. 2, des Trackings. Aus einer Bildserie 20 wird in Schritt 21 ein Bild 22 ausgewählt, das entweder beim Start des Trackings 12 das erste und bei späteren Schritten das nächstfolgende Bild ist. Ergibt eine Überprüfung 23, dass das letzte Bild der Bildserie 20 abgearbeitet ist, so ist das Ende 24 des Trackings 12 erreicht. Andernfalls wird ein Zähler Z initialisiert (Schritt 25) und für die dem Wert von Z entsprechende Zelle unter der Kontinuitätsannahme eine Bestimmung 26 eines Bildausschnittes aus dem Bild 22 vorgenommen. Die Kontinuitätsannahme geht davon aus, dass die jeweilige Zelle sich von ihrer Position im vorherigen Bild nicht wesentlich entfernt hat.

Ergibt eine Überprüfung 27, dass die Zelle zu Z nicht Teil eines Clusters, also einer Ansammlung von aufgrund ihrer Position nicht voneinander zu unterscheidenden Zellen, ist, so wird die Position der Zelle im Bildausschnitt bestimmt (Schritt 28) und eine Überprüfung 29 durchgeführt, ob die Zelle mit einer anderen Zelle kollidiert ist. Eine Kollision in diesem Sinne entspricht dem optisch nicht mehr auflösbaren Überlappen der Zellgrenzen, somit die x-y-Position zweier oder mehrerer Zellen praktisch zusammentreffen, was sich aufgrund der nicht aufgenommenen z-Position nicht vom einem Zusammentreffen aller drei Koordinaten unterscheiden lässt. Ein partielles Zusammentreffen liegt vor, wenn die zwei oder mehreren Zellen trotz teilweiser Überlappung als getrennte Objekte mit individuell verschiedenen x-y-Werten aufgelöst werden können.

Liegt keine Kollision vor, so werden die Zellkoordinaten festgehalten (Schritt 30) und in einem Speicher 31 abgelegt. Liegt eine Kollision vor, so wird ein neuer Cluster angenommen (Schritt 32) und die entsprechenden Informationen in einem weiteren Speicher 33 abgelegt.

Ergibt die Überprüfung 27, dass die Zelle zu Z Teil eines Clusters ist, so wird eine Untersuchung 34 vorgenommen, ob sich dieser Cluster aufgespalten hat. Dabei werden Informationen mit dem Speicher 33 der Clusterinformationen ausgetauscht. Die entsprechenden Zellkoordinaten werden ebenfalls in Schritt 30 festgehalten und entsprechend im Speicher 31 abgelegt. Auf Schritt 30 folgt eine Überprüfung 35, ob alle zu verfolgenden Zellen bereits bearbeitet sind. Sind noch Zellen unbearbeitet, so erfolgt eine Erhöhung 36 des Zählers Z und das Verfahren wird bei Schritt 26 fortgesetzt. Sind alle Zellen bearbeitet, so wird bei Schritt 21 fortgesetzt.

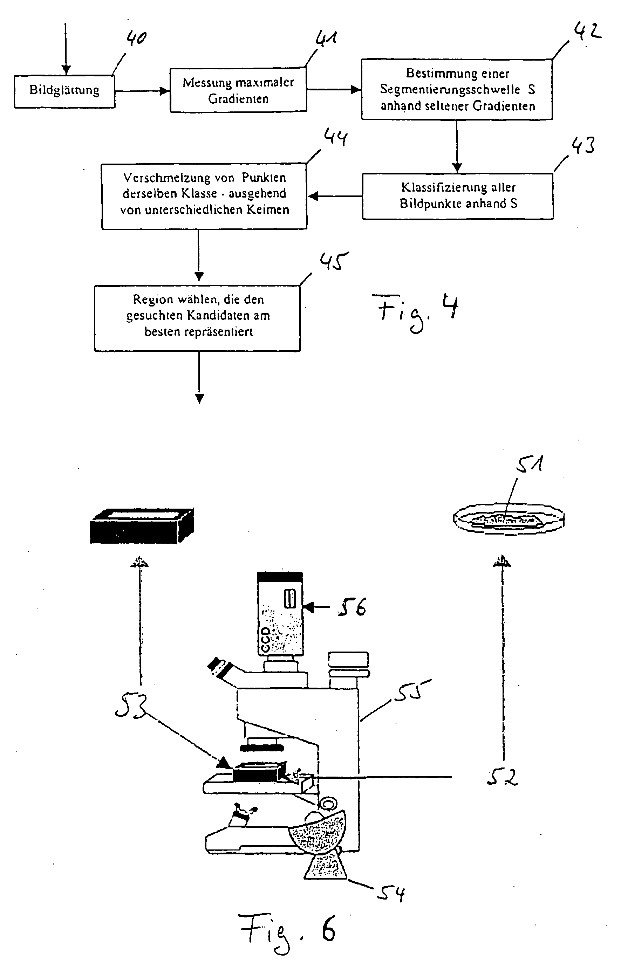

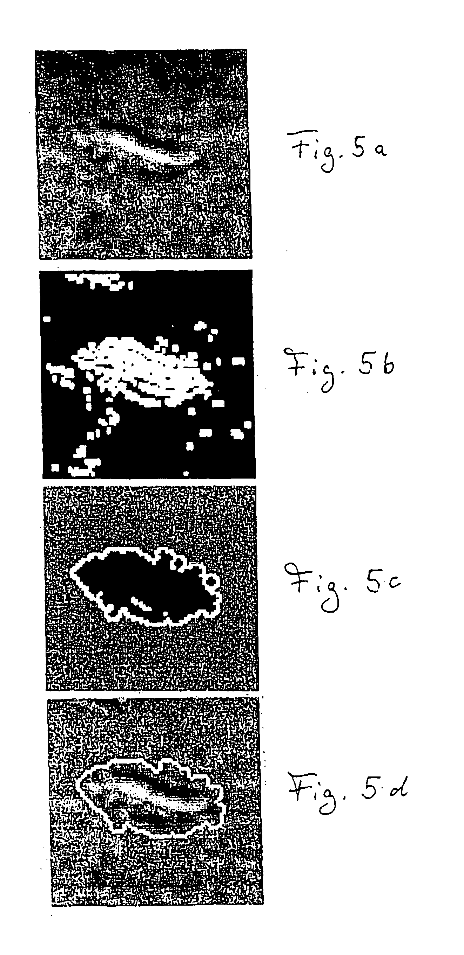

Fig. 4 zeigt ein Blockdiagramm, das das erfindungsgemäße Verfahren zur Segmentierung darstellt. Die hier dargestellten Schritte können in Schritt 28 in Fig. 3 enthalten sein. Es kann eine Bildglättung 40 erfolgen, deren Ergebnis eine Abbildung wie in Fig. 5a sein kann. Fig. 5a zeigt eine beispielhafte Abbildung einer Zelle als das Ergebnis einer Digitalisierung eines lichtmikroskopischen Aufnahme mit 256 Graustufen.

Darauf folgt die Bestimmung 41 eines maximalen Gradienten je Bildpunkt der Abbildung als das Maximum der Differenzen zwischen einem Bildwert des Bildpunktes und den entsprechenden Bildwerten aller oder ausgewählter benachbarter Bildpunkte. Dabei werden die Bildwerte des Bildpunktes und der benachbarten Bildpunkte miteinander verglichen und die größte Differenz wird dem Bildpunkt als maximaler Gradient zugeordnet. Darauf folgend wird ein Segmentierungsschwellwert anhand der Häufigkeiten der maximalen Gradienten bestimmt (Schritt 42). Bei der Bestimmung des Segmentierungsschwellwertes werden die häufigsten maximalen Gradienten schrittweise zusammengefasst und die Anzahl der damit erfassten Bildpunkte wird mit einem Schätzwert für die Anzahl der Bildpunkte verglichen, die der Umgebung der zu segmentierenden Zelle angehören. Aus der Anzahl der zusammengefassten maximalen Gradienten wird der Schwellwert bestimmt. Im einfachsten hier dargestellten Fall stimmt der Schwellwert mit der Anzahl der zusammengefassten Gradienten überein. Andere Möglichkeiten sind die Addition bzw. Subtraktion eines festen, vorbestimmten Wertes zu der Anzahl, um damit den Schwellwert zu erhalten. Weiterhin ist es zudem möglich, die Anzahl mit einem vorbestimmten Faktor zu multiplizieren, d.h. um diesen Faktor zu vergrößern oder zu verkleinern, um den Schwellwert zu bestimmen.

Im folgenden Schritt 43 werden die Bildpunkte in eine Objektklasse und eine Umgebungsklasse mittels des Segmentierungsschwellwertes klassifiziert, wobei die Bildpunkte, deren maximaler Gradient dem Segmentierungsschwellwert entspricht oder über diesem liegt, in die Objektklasse und die anderen Bildpunkte in die Umgebungsklasse eingeordnet werden. Dies ergibt eine Abbildung wie in Fig. 5b, die also eine Klassifizierung der Abbildung aus Fig. 5a als eine Zwischenstufe eines erfindungsgemäßen Verfahrens zur Segmentierung zeigt. Es ist zu erkennen, dass in dieser Zwischenstufe auch noch kleinere Bereiche der Zellenumgebung zur Klasse der Zelle gezählt werden.

Anschließend erfolgt eine Verschmelzung 44 von Punkten derselben Klasse von unterschiedlichen Keimen ausgehend zur Bildung eines Segmentbereichs der digitalen Abbildung. Ist wie in Fig. 5a bis 5d ein Ausschnitt der Abbildung so gewählt, dass die Zelle in der Mitte dieses Ausschnitts abgebildet wird, so kann die Verschmelzung auch von der Bildmitte ausgehen. Als Ergebnis einer Verschmelzung zeigt Fig. 5c eine Segmentierung der Abbildung aus Fig. 5a mit einer Darstellung eines Umrisses eines Segmentes. Mittels eines Bereichswachstumsverfahrens können aus den Bildpunkten, die zur Klasse der Zelle gezählt werden, Konturen extrahiert werden. Ein Homogenitätskriterium bestimmt, wann das Bereichswachstumsverfahren an einen anzunehmenden Rand der Zelle stößt. Dieses Kriterium kann vorbestimmt sein und beispielsweise darin bestehen, dass aus der 4er-Nachbarschaft eines Bildpunktes höchstens zwei Bildpunkte zu einer anderen Klasse gehören dürfen. Es ist zu erkennen, dass nur ein zusammenhängender Bereich die Zelle darstellt und der umgebende Bereich die Zellumgebung wiedergibt: In einem abschließenden Schritt 45 wird derjenige Bereich ausgewählt, der anhand der vorhergehenden Zellinformationen die Zelle ab besten wiedergibt.

Fig. 5d zeigt den in die Abbildung aus Fig. 5a eingetragenen Umriss aus Fig. 5c. Wie hier zu erkennen ist, stimmt der nach dem erfindungsgemäßen Verfahren bestimmte Umriss augenscheinlich gut mit dem wirklichen Umriss der Zelle überein. Die Segmentierung war also erfolgreich.

Fig. 6 zeigt eine erfindungsgemäße Vorrichtung zur Aufnahme von Abbildungen von biologischen Zellen. Die zu verfolgenden Zellen befinden sich in einer Kollagenmatrix, einer 3-dimensionalen Struktur, die auf einem Objektträger 52 liegt. Der Objektträger 52 befindet sich in einem Inkubator 53, der mit Hilfe einer Infrarotquelle 54 oder einer anderen Wärmequelle die Probe in einem kontrollierten thermischen Zustand hält. Das Mikroskop 55 fokussiert eine feste Ebene der Probe und wird während der Analyse nicht mehr verändert. Eine CCD-Kamera 56 nimmt in einem festen Zeittakt, zum Beispiel alle zwei Minuten, ein Bild der Probe auf, das auf einem mit der CCD-Kamera 56 verbundenen Computer (nicht dargestellt) übertragen und dort gespeichert wird. Die damit im Computer vorliegenden Abbildungen können einer Segmentierung unterworfen und, nachdem vom Benutzer eine oder mehrere Zellen zur Verfolgung und Visualisierung ihres dynamischen Verhaltens ausgewählt wurden, zur Analyse des dynamischen Verhaltens benutzt werden. Die dabei gewonnenen Informationen können auf verschiedene Weise im Computer aufgearbeitet und dem Benutzer zur Verfügung gestellt werden.

Das erfindungsgemäße Segmentierungsverfahren ergibt sich auch aus dem folgenden beispielhaften Algorithmus.
1) Erzeugung eines Histogramms maximaler Gradienten der Abbildung (als Hist bezeichnet)
2) Aufsteigende Sortierung des Histogramms nach Häufigkeiten der maximalen Gradienten (als SHist bezeichnet)
3) Initialisierungen (kleinstmöglicher_Wert := 0, höchstmöglicher_Wert := 255; i := höchstmöglicher_Wert; abgezählte Pixel := 0)
4) Solange (abgezählte_Pixel < geschätzte_Umgebungsgröße) und
   (i > kleinstmöglicher_Gradient)
   {
4.a) abgezählte_Pixel := abgezählte_Pixel + SHist[i]
4.b) i := i - 1
   }
5) Schwelle := höchstmöglicher_Wert - i
6) alle Bildpunkte der Abbildung markieren, deren maximaler Gradient >= Schwelle
7) Durchführung von Bereichswachstumsverfahren: vom Ausschnittsmittelpunkt aus nord-östlich, süd-östlich, süd-westlich und nord-westlich
8) Das größte Segment entspricht der gesuchten Zelle.
9) Es wird die Kontur um das Segment festgestellt.

Nach der Sortierung in Schritt 2) ist das "Histogramm" kein Histogramm im eigentlichen Sinne mehr. Es ist nun eine aufsteigende Aufstellung der Anzahl von Bildpunkten entsprechend der aufsteigenden Häufigkeit der jeweiligen maximalen Gradienten. Es ist also kein Histogramm für Gradienten-Größen sondern zeigt die Verteilung der Gradienten-Häufigkeiten.

Die in Schritt 6) markierten Bildpunkte ergeben eine Näherung für den Bereich, den die Zelle in der Abbildung einnimmt. Durch das Bereichswachstum in Schritt 7) werden diese Bildpunkte zu einem zusammenhängenden Bereich zusammengefasst. Irrtümlich ausgewählte Bildpunkte, die außerhalb liegen (siehe Fig. 5b), sind hiervon ausgeschlossen.

Das Bereichswachstum hat seinen Startpunkt in der Mitte eines Bildausschnittes, der so gewählt wird, dass die Zelle im mittleren Bereich des Ausschnittes dargestellt wird. Die Wahl dieses Bildausschnittes basiert auf der Position der Zelle in einer zeitlich vorhergehenden Abbildung. Durch die Annahme, dass die Zelle sich nicht weit fortbewegt hat, kann die zur Segmentierung benötigte Rechenleistung bzw. -zeit weiter reduziert werden, da nicht die gesamte Abbildung, sondern nur ein Ausschnitt bearbeitet werden muss.

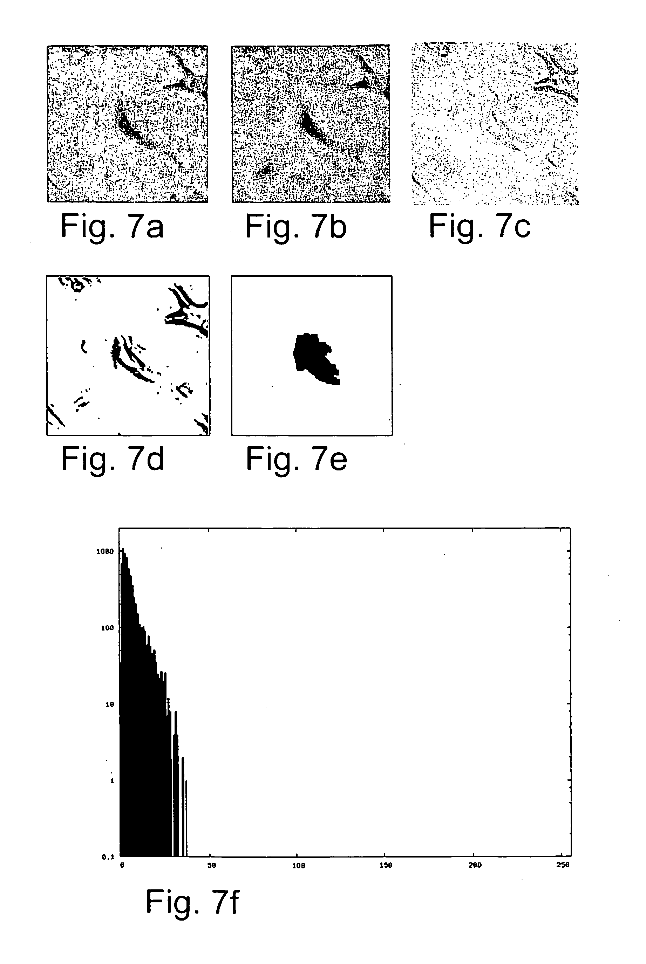

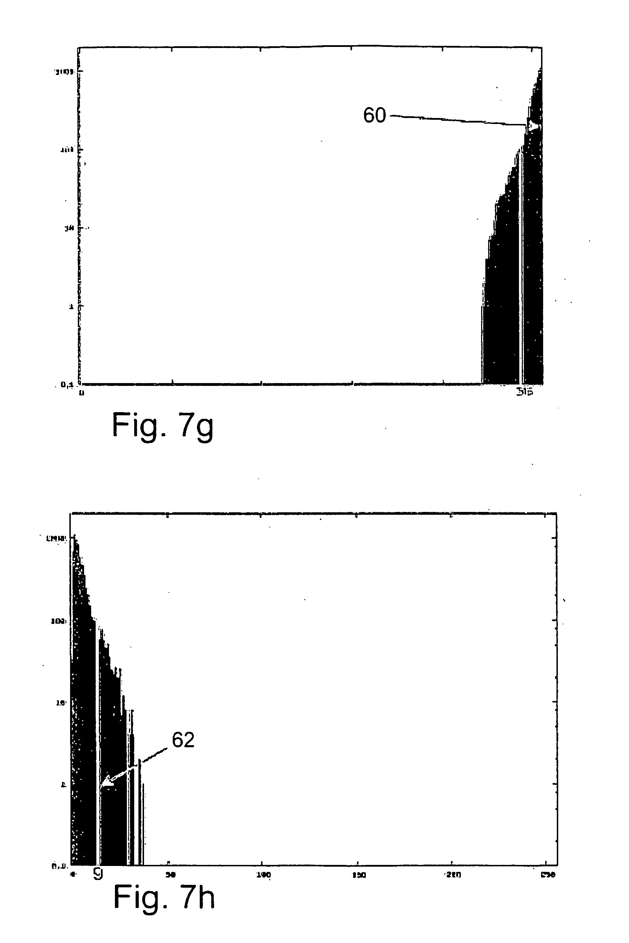

Fig. 7f zeigt ein Gradientenhistogramm, das sich aus dem in Fig. 7c dargestellten Gradientenbild einer Zellabbildung ergibt. In Fig. 7a ist die Abbildung einer Zelle zu sehen, die in Fig. 7b nach einer Glättung gezeigt ist. Fig. 7c zeigt die Gradientengrößen für jedes Pixel. In Fig. 7c ist zur besseren Visualisierung in der Darstellung der Kontrast erhöht worden. Die Skalierung der x-Achse des in Fig. 7f gezeigten Histogramms geht von 0 bis 255, entsprechend der möglichen Differenzen im Grauwert benachbarter Bildpunkte. Die Skalierung der y-Achse ist logarithmisch, um die Variation der Häufigkeiten besser darzustellen. In dem in Fig. 7f gezeigten Histogramm treten keine maximalen Gradienten mit einem Wert von 40 oder mehr auf. Diesen maximalen Gradienten wird damit eine Häufigkeit von 0 zugeordnet. Dementsprechend sind die ersten 215 Positionen im aufsteigend sortieren Diagramm von Fig. 7g leer.

Beginnend mit dem häufigsten Gradienten, also von rechts nach links in Fig. 7g, werden die dem jeweiligen Gradienten zuzuordnenden Bildpunkte abgezählt, bis die Grenze des Umgebungsgrößenschätzwertes erreicht ist. In Fig. 7g ist dies durch die helle Linie dargestellt, die diejenigen häufigsten Gradienten 60 von dem Rest des Diagramms trennt, die zusammengenommen für eine Anzahl von Bildpunkten stehen, die über der geschätzten Anzahl von Umgebungsbildpunkten liegt. Es ist hierbei SHist[255-247], die Anzahl der Bildpunkte mit den 9 häufigsten maximalen Gradienten, noch kleiner als der Schätzwert für die Umgebungsgröße, während SHist[255-246] schon größer als dieser Schätzwert ist. In der Praxis hat es sich gezeigt, dass für viele Fälle die halbe Pixelanzahl der gesamten Abbildung als guter erster Schätzwert angenommen werden kann.

In Fig. 7h ist der Schwellwert, der aus der Anzahl der zusammengenommenen häufigsten maximalen Gradienten bestimmt wurde, in das Gradientenhistogramm aus Fig. 7f eingezeichnet. Alle Bildpunkte, deren maximale Gradienten kleiner als der Schwellwert 62 sind, deren Gradienten somit links vom Schwellwert dargestellt sind, werden der Umgebung zugeordnet. Diejenigen Bildpunkte, deren Gradient über der Schwelle liegt, hier also größer als 9 ist, werden als zur Zelle gehörig angenommen. Hierbei kann angenommen werden, dass die Umgebungsbildpunkte kleine Gradienten haben und dass die Bildpunkte, die die Zelle abbilden, eher große Gradienten aufweisen. In der praktischen Anwendung hat sich gezeigt, dass sich bei speziellen Bildmaterial aus der Anzahl der Wiederholungen ein weiter verbesserter Schwellwert durch eine Multiplikation mit einem Faktor im Bereich von 0,5 bis 1,5 erreichen lässt. Mit der Anwendung des Schwellwertes auf das Gradientenbild 7c ergibt sich das binarisierte Bild 7d, aus dem mittels einer Verschmelzung vom Ausschnittsmittelpunkt in alle Richtungen die Zellfläche in einer Abbildung wie in Fig. 7e erhalten wird.

Hier wurde die Anzahl der häufigsten maximalen Gradienten direkt als Schwellwert angenommen, es ist jedoch möglich, bei der Bestimmung des Schwellwertes in vorbestimmter Weise hiervon abzuweichen. Beispielsweise kann es unter Umständen vorteilhaft sein, einen höheren oder niedrigen Schwellwert anzunehmen. Der Schwellwert kann dann beispielsweise durch Subtraktion oder Addition eines festen Wertes oder durch Multiplikation mit einem vorgegeben Faktor ermittelt werden. Auch diese Anpassung des Schwellwertes kann von einer Segmentierung an eine darauffolgende als Parameter übergeben werden.

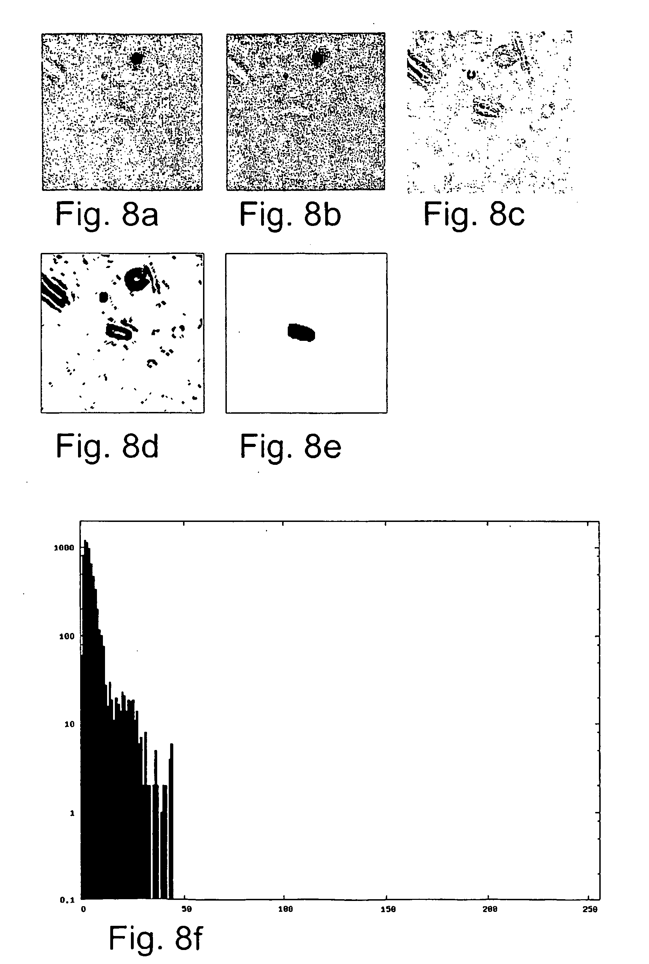

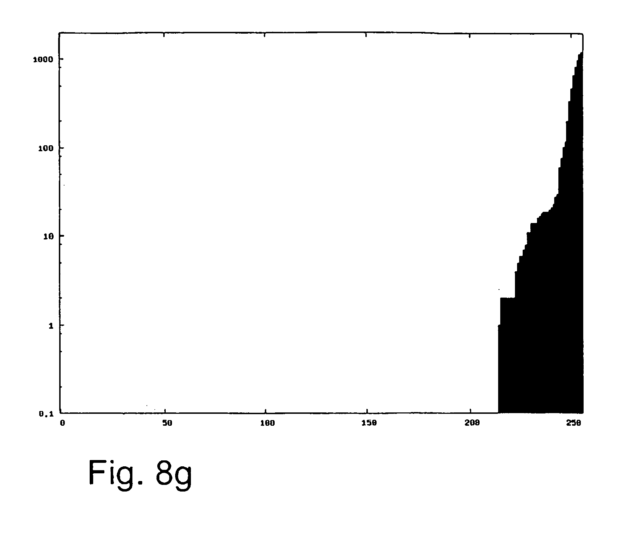

Mit den Fig. 8a bis 8g ist das erfindungsgemäße Verfahren entsprechend zu den Fig. 7a bis 7h am Beispiel einer anderen Zellabbildung nochmals dargestellt.

Das erfindungsgemäße Verfahren zur Segmentierung einer digitalen Abbildung von biologischen Zellen ist grauwert- und forminvariant und kann mit Bildmaterial arbeiten, das heterogen ausgeleuchtet sein kann. Es kommt ohne Markierungen wie Fluoreszenzen oder Annahmen über Form und Farbe der zu segmentierenden Zellen aus. Erst ein solches automatisiertes Verfahren erlaubt es, so umfangreiche Untersuchungen anzustellen, dass Aussagen mit statistischer Relevanz getroffen werden können. Es ist weiterhin geeignet, biologisch relevante Charakteristika wie Farbwert, Zellgröße und -form zu detektieren. Außer nicht gefärbten Zellen, die die bevorzugte Anwendung darstellen, sind auch mit einen Fluoreszenzfarbstoff markierte Zellen detektierbar.

Unter Umständen kann auch eine vereinfachte Variante des erfindungsgemäßen Verfahrens eingesetzt werden. Hierbei wird auf eine Sortierung verzichtet und stattdessen wird der Umgebungsgrößenwert als Anzahl der Bildpunkte, für die der kleinste maximale Gradient bestimmt wurde, angenommen und unter iterativem Vergleichen zwischen Umgebungsgrößenwert und dem vorgegebenen Schätzwert für die Anzahl von Bildpunkten, die die Umgebung einer biologischen Zelle abbilden, und die Anzahl der Bildpunkte mit dem jeweils nächstgrößeren maximalen Gradienten zum Umgebungsgrößenwert hingenommen, bis der Umgebungsgrößenwert den Schätzwert überschreitet oder erreicht, wobei der Segmentierungsschwellwert aus der Anzahl der Wiederholungen des iterativen Vergleichens und Hinzunehmens bestimmt wird. Für die hier gezeigten Zellabbildungen ist im allgemeinen das komplexere Verfahren gemäß der Erfindung vorteilhaft, während es bei geeignetem Bildmaterial ausreicht, die vereinfache Variante einzusetzen. Im oben beschriebenen Algorithmus fallen dabei die Schritte 2) bis 5) weg und werden durch eine Schleife der folgenden Form ersetzt:
abgezählte_Pixel := 0
   Solange (abgezählte_Pixel < geschätzte Umgebungsgröße) abgezählte_Pixel := abgezählte_Pixel + Hist[i]
   i:=i+1.

Vorteilhaft daran ist, dass auf das Sortieren verzichtet und somit eine algorithmische Vereinfachung erreicht werden kann, womit sich die zur Segmentierung notwendige Rechenzeit reduzieren lässt.

In einer weiteren Ausgestaltung der Erfindung wird zur Bestimmung des Segmentierungsschwellwertes die Anzahl der Wiederholungen durch eine Konstante festgelegt. Abhängig von der Verteilung von Objekt- und Umgebungspixeln in einem speziellen Experiment kann ein bestimmter Wert für diese Konstante festgelegt werden. Sinnvolle Bereiche erschließen sich aus speziellem Datenmaterial; bei den betrachteten Beispielen ergaben sich typischerweise Werte im Bereich von 5 bis 20. Bei günstigen Bedingungen kann man mit einer konstanten Schwelle auskommen, die mit einem anwendungsabhängigen Faktor variiert werden kann.

## Patentansprüche

1. Verfahren zur Segmentierung einer digitalen Abbildung (22) von biologischen Zellen (2, 3) mit den Schritten:
- Bestimmen (41) eines maximalen Gradienten je Bildpunkt der Abbildung als das Maximum der Differenzen zwischen einem Bildwert des Bildpunktes und den entsprechenden Bildwerten aller oder ausgewählter benachbarter Bildpunkte,
- Bestimmen (42) eines Segmentierungsschwellwertes anhand der Häufigkeiten der maximalen Gradienten mit den Schritten,
a) Zuordnen einer Gradientenhäufigkeit zu allen maximalen Gradienten als die Anzahl von Bildpunkten mit dem jeweiligen maximalen Gradienten,
b) Bestimmen eines Umgebungsgrößenwerts als Anzahl der Bildpunkte, für die der häufigste maximale Gradient bestimmt wurde,
c) Iteratives Vergleichen zwischen Umgebungsgrößenwert und einem vorgegebenen Schätzwert für die Anzahl von Bildpunkten, die die Umgebung einer biologischen Zelle abbilden, und Hinzufügen der Anzahl der Bildpunkte mit dem jeweils nächsthäufigsten maximalen Gradienten zum Umgebungsgrößenwert, bis der Umgebungsgrößenwert den Schätzwert überschreitet oder erreicht, und
d) Bestimmen des Segmentierungsschwellwertes aus der Anzahl der Wiederholungen des Schrittes c),
- Klassifizieren (43) der Bildpunkte in eine Objektklasse und eine Umgebungsklasse mittels des Segmentierungsschwellwertes, wobei die Bildpunkte, deren maximaler Gradient eine bei oder über dem Segmentierungsschwellwert liegende Größe aufweist, in die Objektklasse und die anderen Bildpunkte in die Umgebungsklasse eingeordnet werden, und
- Bildung (44) eines Segmentbereichs der digitalen Abbildung (22) mittels eines Klassenverschmelzungsverfahrens, insbesondere eines Bereichswachstumsverfahrens.

2. Verfahren zur Segmentierung nach Anspruch 1, **dadurch gekennzeichnet, dass** der untersuchte Bildwert eines Bildpunktes der Grauwert des Bildpunktes ist.

3. Verfahren zur Segmentierung nach einem der vorstehenden Ansprüche, **dadurch gekennzeichnet, dass** die ausgewählten benachbarten Bildpunkte die einer 4er- oder 8er-Nachbarschaft um den Bildpunkt sind.

4. Verfahren zur Segmentierung nach einem der vorstehenden Ansprüche, **dadurch gekennzeichnet, dass** der vorbestimmte Schätzwert als Produkt von durchschnittlicher Querschnittsfläche einer Zelle (2, 3) und Auflösung der digitalen Abbildung (22) bestimmt wird.

5. Verfahren zur Segmentierung nach einem der vorstehenden Ansprüche, **dadurch gekennzeichnet, dass** der Segmentierungsschwellwert als die Anzahl der Wiederholungen des Schrittes c) bestimmt wird.

6. Verfahren zur Segmentierung nach einem der Ansprüche 1 bis 5, **dadurch gekennzeichnet, dass** zur Bestimmung des Segmentierungsschwellwertes die Anzahl der Wiederholungen mit einem vorbestimmten Faktor, insbesondere im Bereich von 0,5 bis 1,5, bevorzugt im Bereich von 0,66 bis 1,33, besonders bevorzugt im Bereich von 0,8 bis 1,2, multipliziert und/oder zu der Anzahl der Wiederholungen eine vorbestimmte Konstante, insbesondere im Bereich von -10 bis +10, bevorzugt im Bereich von -5 bis +5, addiert wird.

7. Verfahren zur Segmentierung einer digitalen Abbildung (22) von biologischen Zellen (2, 3) mit den Schritten:
- Bestimmen (41) eines maximalen Gradienten je Bildpunkt der Abbildung als das Maximum der Differenzen zwischen einem Bildwert des Bildpunktes und den entsprechenden Bildwerten aller oder ausgewählter benachbarter Bildpunkte,
- Bestimmen (42) eines Segmentierungsschwellwertes anhand der maximalen Gradienten mit den Schritten,
a) Bestimmen eines Umgebungsgrößenwerts als Anzahl der Bildpunkte, für die der kleinste maximale Gradient bestimmt wurde,
b) Iteratives Vergleichen zwischen Umgebungsgrößenwert und einem vorgegebenen Schätzwert für die Anzahl von Bildpunkten, die die Umgebung einer biologischen Zelle abbilden, und Hinzufügen der Anzahl der Bildpunkte mit dem jeweils nächstgrößeren maximalen Gradienten zum Umgebungsgrößenwert, bis der Umgebungsgrößenwert den Schätzwert überschreitet oder erreicht, und
c) Bestimmen des Segmentierungsschwellwertes aus der Anzahl der Wiederholungen des Schrittes b),
- Klassifizieren (43) der Bildpunkte in eine Objektklasse und eine Umgebungsklasse mittels des Segmentierungsschwellwertes, wobei die Bildpunkte, deren maximaler Gradient eine bei oder über dem Segmentierungsschwellwert liegende Größe aufweist, in die Objektklasse und die anderen Bildpunkte in die Umgebungsklasse eingeordnet werden, und
- Bildung (44) eines Segmentbereichs der digitalen Abbildung (22) mittels eines Klassenverschmelzungsverfahrens, insbesondere eines Bereichswachstumsverfahrens.

8. Verfahren zur Analyse des dynamischen Verhaltens biologischer Zellen (2, 3) anhand eines Bilddatensatzes (20) mehrerer in zeitlichen Abständen nacheinander erstellter Abbildungen (22) der Zellen (2, 3) in einem Untersuchungsbereich mit den Schritten:
- Segmentieren einer ersten Abbildung zur Bestimmung von ersten Zellpositionen in der ersten Abbildung,
- Segmentieren einer zweiten Abbildung zur Bestimmung von zweiten Zellpositionen in der zweiten Abbildung und
- Zuordnen der zweiten Zellpositionen zu den ersten Zellpositionen,
wobei die Segmentierung gemäß einem Verfahren nach einem der vorstehenden Ansprüche erfolgt.

9. Verfahren zur Analyse des dynamischen Verhaltens nach Anspruch 8, **dadurch gekennzeichnet, dass** beim Segmentieren der zweiten Abbildung der vorbestimmte Schätzwert als die durchschnittliche Anzahl von Bildpunkten der Zellen (2, 3) darstellenden Segmentbereiche in der ersten Abbildung bestimmt wird.

10. Verfahren zur Analyse des dynamischen Verhaltens nach Anspruch 8, **dadurch gekennzeichnet, dass** die Zuordnung der zweiten Zellpositionen zu den ersten Zellpositionen anhand mindestens einer Zelleigenschaft aus der Gruppe Gesamtlichtstärke, Nähe, Größe und Form erfolgt.

11. Verfahren zur Visualisierung des dynamischen Verhaltens biologischer Zellen anhand eines Bilddatensatzes (20) mehrerer in zeitlichen Abständen nacheinander erstellter Abbildungen (22) der Zellen in einem Untersuchungsbereich mit den Schritten:
- Aufnahme einer zeitlichen Abfolge (20) von digitalen Abbildungen (22),
- Segmentieren einer Startabbildung,
- Auswahl einer oder mehrerer zu untersuchender Zellen (2, 3),
- Analyse des dynamischen Verhaltens der zu untersuchenden Zellen und
- Aufbereitung der Analyseninformationen,
wobei die Segmentierung gemäß einem Verfahren nach einem der Ansprüche 1 bis 7 und/oder die Analyse des dynamischen Verhaltens gemäß einem Verfahren nach einem der Ansprüche 8 bis 10 erfolgt.

12. Verfahren zur Visualisierung des dynamischen Verhaltens biologischer Zellen (2, 3) nach Anspruch 11,
**dadurch gekennzeichnet, dass** bei der Analyse des dynamischen Verhaltens der Zellen die Zuordnung der zweiten Zellpositionen zu den ersten Zellpositionen anhand einer Zellpositionen zugeordneten Bewegungsrichtung und / oder einer zugeordneten Geschwindigkeit erfolgt.

13. Vorrichtung zur Segmentierung einer digitalen Abbildung (22) von biologischen Zellen (2, 3) mit:
- Mitteln zur Bestimmung (41) eines maximalen Gradienten je Bildpunkt der Abbildung als das Maximum der Differenzen zwischen einem Bildwert des Bildpunktes und den entsprechenden Bildwerten aller oder ausgewählter benachbarter Bildpunkte,
- Mitteln zur Bestimmung (42) eines Segmentierungsschwellwertes anhand der Häufigkeiten der maximalen Gradienten mit:
a) Mitteln zur Zuordnung einer Gradientenhäufigkeit zu allen maximalen Gradienten als die Anzahl von Bildpunkten mit dem jeweiligen maximalen Gradienten,
b) Mitteln zur Bestimmung eines Umgebungsgrößenwerts als Anzahl der Bildpunkte, für die der häufigste maximale Gradient bestimmt wurde,
c) Mitteln zum iterativen Vergleichen zwischen Umgebungsgrößenwert und einem vorgegebenen Schätzwert für die Anzahl von Bildpunkten, die die Umgebung einer biologischen Zelle abbilden, und zur Hinzufügung der Anzahl der Bildpunkte mit dem jeweils nächsthäufigsten maximalen Gradienten zum Umgebungsgrößenwert, bis der Umgebungsgrößenwert den Schätzwert überschreitet oder erreicht, und
d) Mitteln zur Bestimmung des Segmentierungsschwellwertes aus der Anzahl der Iterationen beim iterativen Vergleichen,
- Mitteln zur Klassifizierung (43) der Bildpunkte in eine Objektklasse und eine Umgebungsklasse mittels des Segmentierungsschwellwertes und Einordnung der Bildpunkte, deren maximaler Gradient eine bei oder über dem Segmentierungsschwellwert liegende Größe aufweist, in die Objektklasse und der anderen Bildpunkte in die Umgebungsklasse, und
- Mitteln zur Bildung (44) eines Segmentbereichs der digitalen Abbildung (22) mit Mitteln zur Klassenverschmelzung, insbesondere zum Bereichswachstum.

14. Vorrichtung zur Analyse des dynamischen Verhaltens biologischer Zellen (2, 3) anhand eines Bilddatensatzes (20) mehrerer in zeitlichen Abständen nacheinander erstellter Abbildungen (22) der Zellen (2, 3) in einem Untersuchungsbereich mit:
- Mitteln zur Segmentierung einer ersten Abbildung zur Bestimmung von ersten Zellpositionen in der ersten Abbildung gemäß Anspruch 13,
- Mitteln zur Segmentierung einer zweiten Abbildung zur Bestimmung von zweiten Zellpositionen in der zweiten Abbildung gemäß Anspruch 13 und
- Mitteln zur Zuordnung der zweiten Zellpositionen zu den ersten Zellpositionen.

15. Vorrichtung zur Visualisierung des dynamischen Verhaltens biologischer Zellen (2, 3) anhand eines Bilddatensatzes (20) mehrerer in zeitlichen Abständen nacheinander erstellter Abbildungen (22) der Zellen (2, 3) in einem Untersuchungsbereich mit:
- Mitteln zur Aufnahme einer zeitlichen Abfolge von digitalen Abbildungen,
- Mitteln zur Segmentierung einer Startabbildung gemäß Anspruch 13,
- Mitteln zur Auswahl einer oder mehrerer zu untersuchenden Zellen,
- Mitteln zur Analyse des dynamischen Verhaltens der zu untersuchenden Zellen nach Anspruch 14 und
- Mitteln zur Aufbereitung der Analyseninformationen.

16. Computerprogramm mit Computerprogrammcode zur Steuerung eines Computers zur Durchführung der Schritte der Verfahren nach einem der Ansprüche 1 bis 12, wenn das Computerprogramm auf einem Computer ausgeführt wird.

## Claims

1. Process for segmenting a digital image (22) of biological cells (2, 3) having the steps:
- determining (41) a maximum gradient for each pixel of the image as the maximum of the differences between a pixel value of the pixel and the corresponding pixel values of all or selected adjacent pixels,
- determining (42) a segmenting threshold value using the frequencies of the maximum gradients having the steps,
a) assigning a gradient frequency to all maximum gradients as the number of pixels having the particular maximum gradient,
b) determining an environment variable as the number of pixels, for which the most frequent maximum gradient has been determined,
c) iterative comparison between environment variable and a preset estimated value for the number of pixels which reproduce the environment of a biological cell, and adding the number of pixels with the particular next most frequent maximum gradient to the environment variable until the environment variable exceeds or reaches the estimated value, and
d) determining the segmenting threshold value from the number of repetitions of step c),
- classifying (43) the pixels into an object class and an environment class by means of the segmenting threshold value, wherein the pixels, the maximum gradient of which has a size lying at or above the segmenting threshold value, are categorised into the object class and the other pixels into the environment class, and
- forming (44) a segmenting region of the digital image (22) by means of a class merging process, in particular a region growth process.

2. Process for segmenting according to claim 1, **characterised in that** the investigated pixel value of a pixel is the grey-scale value of the pixel.

3. Process for segmenting according to one of the above claims, **characterised in that** the selected adjacent pixels are those of a 4 or 8 neighbourhood around the pixel.

4. Process for segmenting according to one of the above claims, **characterised in that** the predetermined estimated value is determined as a product of average cross-sectional area of a cell (2, 3) and resolution of the digital image (22).

5. Process for segmenting according to one of the above claims, **characterised in that** the segmenting threshold value is determined as the number of repetitions of step c).

6. Process for segmenting according to one of claims 1 to 5, **characterised in that** to determine the segmenting threshold value, the number of repetitions is multiplied by a predetermined factor, in particular in the range from 0.5 to 1.5, preferably in the range from 0.66 to 1.33, particularly preferably in the range from 0.8 to 1.2, and/or a predetermined constant, in particular in the range from -10 to +10, preferably in the range from -5 to +5, is added to the number of repetitions.

7. Process for segmenting a digital image (22) of biological cells (2, 3) having the steps:
- determining (41) a maximum gradient for each pixel of the image as the maximum of the differences between a pixel value of the pixel and the corresponding pixel values of all or selected adjacent pixels,
- determining (42) a segmenting threshold value using the maximum gradients having the steps,
a) determining an environment variable as the number of pixels, for which the smallest maximum gradient has been determined,
b) iterative comparison between environment variable and a preset estimated value for the number of pixels which reproduce the environment of a biological cell, and adding the number of pixels with the particular next greatest maximum gradient to the environment variable until the environment variable exceeds or reaches the estimated value, and
c) determining the segmenting threshold value from the number of repetitions of step b),
- classifying (43) the pixels into an object class and an environment class by means of the segmenting threshold value, wherein the pixels, the maximum gradient of which has a size lying at or above the segmenting threshold value, are categorised into the object class and the other pixels into the environment class, and
- forming (44) a segmenting region of the digital image (22) by means of a class merging process, in particular a region growth process.

8. Process for analysis of the dynamic behaviour of biological cells (2, 3) using a pixel data record (20) of several images (22) of the cells (2, 3) produced in succession at time intervals in an investigation region having the steps:
- segmenting a first image to determine first cell positions in the first image,
- segmenting a second image to determine second cell positions in the second image and
- assigning the second cell positions to the first cell positions, wherein segmenting takes place using a process according to one of the above claims.

9. Process for analysis of the dynamic behaviour according to claim 8, **characterised in that** during segmenting of the second image, the predetermined estimated value is determined as the average number of pixels of the segmenting regions representing the cells (2, 3) in the first image.

10. Process for analysis of the dynamic behaviour according to claim 8, **characterised in that** the assignment of the second cell positions to the first cell positions takes place using at least one cell property from the group comprising total light intensity, proximity, size and shape.

11. Process for visualising the dynamic behaviour of biological cells using a pixel data record (20) of several images (22) of the cells produced in succession at time intervals in an investigation region having the steps:
- recording a time sequence (20) of digital images (22),
- segmenting a starting image,
- selecting one or more cells (2, 3) to be investigated,
- analysis of the dynamic behaviour of the cells to be investigated and
- preparing the analysis information, wherein segmenting takes place using a process according to one of claims 1 to 7 and/or analysis of the dynamic behaviour using a process according to one of claims 8 to 10.

12. Process for visualising the dynamic behaviour of biological cells (2, 3) according to claim 11, **characterised in that** during analysis of the dynamic behaviour of the cells, the assignment of the second cell positions to the first cell positions takes place using a movement direction and/or an assigned rate related to cell positions.

13. Device for segmenting a digital image (22) of biological cells (2, 3) having:
- means for determining (41) a maximum gradient for each pixel of the image as the maximum of the differences between a pixel value of the pixel and the corresponding pixel values of all or selected adjacent pixels,
- means for determining (42) a segmenting threshold value using the frequencies of the maximum gradients having:
a) means for assigning a gradient frequency to all maximum gradients as the number of pixels with the particular maximum gradient,
b) means for determining an environment variable as the number of pixels, for which the most frequent maximum gradient has been determined,
c) means for iterative comparison between environment variable and a preset estimated value for the number of pixels which reproduce the environment of a biological cell, and for adding the number of pixels with the particular next most frequent maximum gradient to the environment variable until the environment variable exceeds or reaches the estimated value, and
d) means for determining the segmenting threshold value from the number of iterations during iterative comparison,
- means for classifying (43) the pixels into an object class and an environment class by means of the segmenting threshold value and categorising the pixels, the maximum gradient of which has a size lying at or above the segmenting threshold value, into the object class and the other pixels into the environment class, and
- means for forming (44) a segmenting region of the digital image (22) with means for class merging, in particular for region growth.

14. Device for analysis of the dynamic behaviour of biological cells (2, 3) using a pixel data record (20) of several images (22) of the cells (2, 3) produced in succession at time intervals in an investigation region having:
- means for segmenting a first image to determine first cell positions in the first image according to claim 13,
- means for segmenting a second image to determine second cell positions in the second image according to claim 13 and
- means for assigning the second cell positions to the first cell positions.

15. Device for visualisation of the dynamic behaviour of biological cells (2, 3) using a pixel data record (20) of several images (22) of the cells (2, 3) produced in succession at time intervals in an investigation region having:
- means for recording a time sequence of digital images,
- means for segmenting a starting image according to claim 13,
- means for selecting one or more cells to be investigated,
- means for analysis of the dynamic behaviour of the cells to be investigated according to claim 14 and
- means for preparing the analysis information.

16. Computer program having computer program code to control a computer for carrying out the steps of the process according to one of claims 1 to 12 when the computer program is executed on a computer.

## Revendications

1. Procédé de segmentation d'une représentation numérique (22) de cellules biologiques (2, 3), comprenant les étapes consistant à :
- déterminer (41) un gradient maximal pour chaque point image de la représentation en tant que maximum des différences entre une valeur d'image du point image et les valeurs d'image correspondantes de tous les points images voisins, ou de points images sélectionnés,
- déterminer (42) une valeur de seuil de segmentation à l'aide des fréquences des gradients maximaux, avec les étapes suivantes :
a) association d'une fréquence de gradient à tous les gradients maximaux, en tant que le nombre de points images ayant le gradient maximal respectif,
b) détermination d'une valeur de grandeur d'environnement, en tant que nombre de points images, pour lequel le gradient maximal le plus fréquent a été déterminé,
c) comparaison itérative entre une valeur de grandeur d'environnement et une valeur estimative prédéterminée pour le nombre des points images, qui représentent l'environnement d'une cellule biologique, et adjonction du nombre des points images, ayant le gradient maximal chaque fois de la fréquence maximale immédiatement la suivante, à la valeur de grandeur d'environnement, jusqu'à ce que la valeur de grandeur d'environnement ait dépassé ou atteint la valeur estimative, et
d) détermination de la valeur de seuil de segmentation, à partir du nombre des répétitions de l'étape c)
- classement (43) des points images dans une classe d'objet et une classe d'environnement, au moyen de la valeur seuil de segmentation, les points images, dont le gradient maximal présente une grandeur située à ou au-dessus de la valeur seuil de segmentation, étant classés dans la classe d'objet, et les autres points images étant classés dans la classe d'environnement, et
- formation (44) d'une zone de segments de la représentation numérique (22), à l'aide d'un procédé de fusion de classes, en particulier un procédé de croissance de zone.

2. Procédé de segmentation selon la revendication 1, **caractérisé en ce que** la valeur image recherchée d'un point image est la valeur de gris du point image.

3. Procédé de segmentation selon l'une des revendications précédentes, **caractérisé en ce que** les points images voisins sélectionnés sont un voisinage à 4 ou un voisinage à 8 autour du point image.

4. Procédé de segmentation selon l'une des revendications précédentes, **caractérisé en ce que** la valeur estimative prédéterminée est déterminée en tant que produit de l'aire moyenne de section transversale d'une cellule (2, 3) et de la résolution de la représentation numérique (22).

5. Procédé de segmentation selon l'une des revendications précédentes, **caractérisé en ce que** la valeur de seuil de segmentation est déterminée comme étant le nombre des répétitions de l'étape c).

6. Procédé de segmentation selon l'une des revendications 1 à 5, **caractérisé en ce que**, pour déterminer la valeur de seuil de segmentation, le nombre des répétitions est multiplié avec un facteur prédéterminé, en particulier dans la fourchette de 0,5 à 1,5, de préférence dans la fourchette de 0,66 à 1,33, de façon particulièrement préférée dans la fourchette de 0,8 à 1,2, et/ou au nombre des répétitions est ajoutée une constante prédéterminée, en particulier dans la fourchette de -10 à +10, de préférence dans la fourchette de -5 à +5.

7. Procédé de segmentation d'une représentation numérique (22) de cellules biologiques (2, 3), comprenant les étapes consistant à :
- déterminer (41) un gradient maximal pour chaque point image de la représentation en tant que maximum des différences entre une valeur d'image du point image et les valeurs d'image correspondantes de tous les points images voisins, ou de points images sélectionnés,
- déterminer (42) une valeur de seuil de segmentation à l'aide des fréquences des gradients maximaux, avec les étapes suivantes :
a) détermination d'une valeur de grandeur d'environnement en tant que nombre des points images, pour lequel le gradient maximal le plus petit a été déterminé,
b) comparaison itérative entre la valeur de grandeur d'environnement et une valeur estimative prédéterminée pour le nombre des points images, reproduisant l'environnement d'une cellule biologique, et addition du nombre des points images, ayant le gradient maximal, chaque fois le plus grand immédiatement le suivant, à la valeur de grandeur d'environnement, jusqu'à ce que la valeur de grandeur d'environnement ait dépassé ou atteint la valeur estimative, et
c) détermination de la valeur de seuil de segmentation à partir du nombre des répétitions de l'étape b),
- classement (43) des points images dans une classe d'objet et une classe d'environnement, au moyen de la valeur seuil de segmentation, les points images, dont le gradient maximal présente une grandeur située à ou au-dessus de la valeur seuil de segmentation, étant classés dans la classe d'objet, et les autres points images étant classés dans la classe d'environnement, et
- formation (44) d'une zone de segments de la représentation numérique (22), à l'aide d'un procédé de fusion de classes, en particulier un procédé de croissance de zone.

8. Procédé d'analyse du comportement dynamique de cellules biologiques (2, 3) à l'aide d'un jeu de données images (20) de plusieurs représentations (22), établies les unes après les autres selon les espacements temporels, des cellules (2, 3), dans une plage de recherche, comprenant les étapes consistant à :
- segmenter une première représentation pour détermination de premières positions de cellule dans la première représentation,
- segmenter une deuxième représentation pour détermination de deuxièmes positions de cellule dans la deuxième représentation, et
- associer les deuxièmes positions de cellules aux premières positions de cellule, la segmentation se faisant suivant un procédé selon l'une des revendications précédentes.

9. Procédé d'analyse du comportement dynamique selon la revendication 8, **caractérisé en ce que**, lors de la segmentation de la deuxième représentation, la valeur estimative prédéterminée est déterminée comme étant le nombre moyen de zones de segment représentant des points images des cellules (2, 3) dans la première représentation.

10. Procédé d'analyse du comportement dynamique selon la revendication 8, **caractérisé en ce que** l'association des deuxièmes positions de cellule aux premières positions de cellule s'effectue à l'aide d'au moins une propriété de cellules, issues du groupe de l'intensité lumineuse globale, de la proximité, de la taille et de la forme.

11. Procédé de visualisation du comportement dynamique de cellules biologiques à l'aide d'un jeu de données images (20) de plusieurs représentations, établies les unes après les autres suivant des espacements temporels, des cellules dans une zone d'examen, comprenant les étapes consistant à :
- enregistrer une succession temporelle (20) de représentations numériques (22),
- segmenter une représentation de départ,
- sélectionner une ou plusieurs cellules (2, 3) à examiner,
- analyser le comportement dynamique des cellules à examiner, et
- préparer les informations d'analyse,
où la segmentation est effectuée suivant un procédé selon l'une des revendications 1 à 7 et/ou l'analyse du comportement dynamique suivant un procédé selon l'une des revendications 8 à 10.

12. Procédé de visualisation du comportement dynamique de cellules biologiques (2, 3) selon la revendication 11, **caractérisé en ce que**, lors de l'analyse du comportement dynamique des cellules, l'association des deuxièmes positions de cellule aux premières positions de cellule se fait à l'aide d'un dispositif de déplacement associé aux positions de cellule et/ou d'une vitesse associée aux positions de cellule.

13. Dispositif de segmentation d'une représentation numérique (22) de cellules biologiques (2, 3), avec :
- des moyens de détermination (41) d'un gradient maximal par points images de la représentation, en tant que maximum des différences entre un élément image du point image et les valeurs d'image correspondantes de tous les points images voisins ou de points images sélectionnés,
- des moyens de détermination (42) d'une valeur de seuil de segmentation, à l'aide des fréquences du gradient maximal, avec :
a) des moyens d'association d'une fréquence de gradient à tous les gradients maximaux, en tant que le nombre de points images ayant le gradient maximal respectif,
b) des moyens de détermination d'une valeur de grandeur d'environnement, en tant que nombre des points images pour lesquels le gradient maximal le plus fréquent a été déterminé,
c) des moyens de comparaison itérative entre une valeur de grandeur d'environnement et une valeur estimative prédéterminée pour le nombre de points images, qui représentent l'environnement d'une cellule biologique, et d'ajoute du nombre des points images au gradient maximal le plus fréquent immédiatement chaque fois le suivant, par rapport à la valeur de grandeur d'environnement, jusqu'à ce que la valeur de grandeur d'environnement dépasse ou atteigne la valeur estimative,
d) des moyens de détermination de la valeur de seuil de segmentation à partir du nombre des itérations, lors d'une comparaison itérative,
- des moyens de classification (43) des points images dans une classe d'objet et une classe d'environnement, au moyen de la valeur seuil de segmentation, et classement des points images dont le gradient maximal présente une grandeur située à ou au-dessus de la valeur seuil de segmentation, dans la classe d'objet et les autres points images dans la classe d'environnement, et
- des moyens de formation (44) d'une zone de segment de la représentation numérique (22), avec des moyens pour la fusion des classes, en particulier pour la croissance de zones.

14. Dispositif d'analyse du comportement dynamique de cellules biologiques (2, 3), à l'aide d'un jeu de données d'images (20), de plusieurs représentations (22) établies les unes après les autres sur des espacements temporels, des cellules (2, 3) dans une zone d'examen, comprenant :
- des moyens de segmentation d'une première représentation, pour détermination de premières positions de cellule dans la première représentation selon la revendication 13,
- des moyens de segmentation d'une deuxième représentation, pour détermination de deuxièmes positions de cellule dans la deuxième représentation selon la revendication 13,
- des moyens d'association des deuxièmes positions de cellule aux premières positions de cellule.

15. Dispositif de visualisation du comportement dynamique de cellules biologiques (2, 3), à l'aide d'un jeu de données d'images (20) de plusieurs représentations (22) établies les unes après les autres suivant des espacements temporels, des cellules (2,3), dans une zone d'examen, comprenant :
- des moyens d'enregistrement d'une succession temporelle de représentations numériques,
- des moyens de segmentation d'une représentation de départ selon la revendication 13,
- des moyens de sélection d'une ou plusieurs cellules à examiner,
- des moyens d'analyse du comportement dynamique des cellules à examiner selon la revendication 14, et
- des moyens de préparation des informations d'analyse.

16. Programme pour ordinateur avec un code de programme pour ordinateur pour la commande d'un ordinateur pour l'exécution des étapes du procédé selon l'une des revendications 1 à 12, lorsque le programme pour ordinateur est exécuté sur un ordinateur.
